# EUROPÄISCHE PATENTSCHRIFT

(11) **EP 1 538 397 B1**
(45) Veröffentlichungstag und Bekanntmachung des Hinweises auf die Patenterteilung: **24.01.2007**
(21) Anmeldenummer: 04027127.2
(22) Anmeldetag: 15.11.2004
(51) Int. Cl.: F24D 19/10, F24D 17/00, G05D 16/20

(54) **Warmwasserversorgungssystem**
Hot water supply system
Système d'alimentation d'eau chaude

(30) Priorität: 03.12.2003 DE 10356503
(43) Veröffentlichungstag der Anmeldung: 08.06.2005
(73) Patentinhaber: MINEBEA Co., Ltd., Kitasaku-gun, Nagano-ken (JP)
(72) Erfinder: Weger, Robert, Dr., 86150 Augsburg (DE)
(74) Vertreter: Liesegang, Eva

(56) Entgegenhaltungen:
- EP-A- 0 905 596
- DE-A1- 2 804 427
- DE-A1- 4 316 219
- DE-U1- 9 421 035
- US-A- 4 658 760
- US-A1- 2002 117 122

## Beschreibung

Die Erfindung betrifft ein Warmwasserversorgungssystem mit einem Pumpenmodul und mit einem drucklosen Speichertank, der einen Zulauf und einen Ablauf für Flüssigkeit aufweist und in dem die Flüssigkeit im wesentlichen bei Atmosphärendruck gespeichert ist. In dem Speichertank kann Wasser auf eine gewünschte Temperatur erwärmt werden. Ein Wasserversorgungssystem gemäß dem Oberbegriff von Anspruch 1 ist z.B. aus der US 2002/0117122 bekannt.

Im Stand der Technik unterscheidet man grundsätzlich zwischen zwei Arten der Warmwassererzeugung. Es gibt Warmwasserversorgungssysteme, welche mit sogenannten Durchlauferhitzern arbeiten, in denen Kaltwasser beim Durchtritt durch einen Wärmetauscher unmittelbar vor Gebrauch erhitzt wird. Durchlauferhitzer arbeiten ohne Speichertank, das Wasser wird beim Durchströmen des Wärmetauschers innerhalb kürzester Zeit (d.h. innerhalb weniger Sekunden) auf die gewünschte Temperatur gebracht, wozu sehr hohe Impulsleistungen notwendig sind. Die bekannten Durchlauferhitzer arbeiten in der Regel mit Erdgas oder Drehstrom; der Gesamtwirkungsgrad von Durchlauferhitzern ist in der Praxis nicht zufriedenstellend.

Im anderen, im Stand der Technik bekannten System zur Warmwassererzeugung ist die Energieentnahme von der Energieeinspeisung zeitlich entkoppelt. Solche Warmwasserversorgungssysteme verwenden einen Speichertank, in dem das gespeicherte Wasser aufgeheizt und aus dem es bei Bedarf entnommen wird. Der Wärmeeintrag erfolgt auch hier über einen Wärmetauscher, er läuft jedoch langsamer und über einen längeren Zeitraum ab. Die Warmwassererzeugung kann mit nahezu beliebigen Energieträgern realisiert werden und ermöglicht auch die Einspeisung von thermischer Solarenergie. Übliche Speichertankgrößen in Haushalten liegen im Bereich zwischen 50 Litern und 500 Litern, wobei die größeren Speichertanks insbesondere bei Systemen mit Solarenergienutzung verwendet werden.

In der heute üblichen Technik wird der gesamte Speichertank mit dem Druck der Kaltwasserleitung beaufschlagt. Selbst wenn in der Kaltwasserzuleitung ein Druckminderer installiert wird, muß aus Sicherheitsgründen der Tank so ausgelegt sein, daß er dem Druck des Kaltwassernetzes standhalten kann. Deshalb sind Speichertanks für Warmwasserversorgungssysteme in der Regel aus Stahl hergestellt. Hieraus ergibt sich ein relativ hohes Leergewicht des Tanks, was ein Nachteil bei der Installation des Warmwassersystems ist. Die Herstellung des Speichertanks aus Metall führt jedoch auch zu Anfälligkeit gegen Korrosion. Zur Verhinderung von Korrosion wurden verschiedene Maßnahmen getroffen, wie die Herstellung des gesamten Speichertanks aus rostfreiem Stahl, eine Emailbeschichtung der Tankinnenseite, die Verwendung löslicher Magnesiumanoden oder Fremdstromanoden an der Innenseite des Tanks oder dergleichen. Diese Maßnahmen sind entweder teuer oder nur bedingt zuverlässig.

Im Stand der Technik ist es ferner bekannt, Kaltwasser mit Hilfe eines Pumpenmoduls auf einem wählbaren Druckniveau zur Verfügung zu stellen. Hierzu wird das Kaltwasser aus einem drucklosen Reservoir von einer Pumpe angesaugt und einem Druckspeichertank mit Gasballast zugeführt. Der Druck innerhalb des Druckspeichers wird durch eine Zweipunkt-Regelung innerhalb vorgegebener Toleranzen konstant gehalten. Hierzu arbeitet der Pumpenmotor im Ein-Aus-Betrieb, so daß die Pumpe eingeschaltet wird, wenn der Druck im Speichertank unter einen ersten vordefinierten Schwellwert fällt, und ausgeschaltet wird, wenn ein zweiter vordefinierter Schwellwert erreicht ist. Abhängig von der Größe des Druckspeichers und der gewählten Hysterese zum Nachführen des Drucks im Inneren des Speichertanks werden mehr oder weniger viele Schaltvorgänge notwendig sein. Um die Anzahl der Schaltvorgänge im Interesse des Systemlebensdauer zu limitieren, ist jedoch immer ein relativ großer Druckspeicher notwendig, der bei Verwendung in Warmwasserversorgungssystemen zusätzlich thermisch isoliert sein muß.

Es ist Aufgabe der Erfindung, ein Warmwasserversorgungssystem für den Hausgebrauch, anzugeben, welche die oben beschriebenen Nachteile vermeidet und mit kostengünstigen Komponenten realisiert werden kann.

Zur Lösung dieser Aufgabe sieht die Erfindung ein Warmwasserversorgungssystem gemäß Anspruch 1 vor.

Die Erfindung sieht ein Warmwasserversorgungssystem vor, das einen Wasserspeichertank mit einem Zulauf und einem Ablauf verwendet, in welchem das Wasser im wesentlichen bei Atmosphärendruck gespeichert ist. Das Warmwasserversorgungssystem verfügt über eine Heizeinrichtung zum Erhitzen des Wassers in dem Wasserspeichertank sowie über ein Pumpenmodul der oben beschriebenen Art, das Wasser aus dem drucklosen Speichertank ansaugt und auf einem wählbaren Druckniveau in das Warmwassernetz einspeist. Der Wasserspeichertank ist vorzugsweise vollständig oder zumindest teilweise aus Kunststoff hergestellt. Dadurch können Probleme aufgrund von Korrosion vermieden werden, die Herstellung des Speichertanks wird kostengünstiger als beim Stand der Technik, und das Gewicht des Speichertanks ist deutlich geringer als das Gewicht eines Stahltanks.

Das Pumpenmodul umfaßt eine Flüssigkeitsleitung, die mit dem Flüssigkeitsablauf verbunden wird; eine Flüssigkeitspumpe, die einen Flüssigkeitsstrom durch die Flüssigkeitsleitung erzeugt; einen Drucksensor zur Erfassung des Drucks in der Flüssigkeitsleitung; ein Elektromotor zum Antreiben der Flüssigkeitspumpe; und eine Regeleinheit, die ein Ausgangssignal von dem Drucksensor empfängt und abhängig davon ein Steuersignal zum Ansteuern des Elektromotors erzeugt, um den Flüssigkeitsdruck in der Flüssigkeitsleitung im wesentlichen auf einem vorgegebenen Wert zu halten.

Kernstück des Pumpenmoduls ist ein auf einfache Weise regelbarer Elektromotor, insbesondere ein elektronisch kommutierter bürstenloser Gleichstrommotor, dessen Drehzahl schnell und präzise einstellbar ist, in Verbindung mit einer Regelschleife. Der Motor treibt abhängig von dem Ausgangssignal des Drucksensors eine Wasserpumpe an, um den Druck im Leitungssystem stromabwärts des Flüssigkeitstanks konstant oder weitgehend konstant zu halten. Das erfindungsgemäße Pumpenmodul ermöglicht die Verwendung eines Speichertanks für Warmwassererzeugungssysteme und ähnliche Anlagen, in dem die Flüssigkeit im wesentlichen bei Atmosphärendruck gespeichert sein kann. Der Speichertank kann ein beliebig großes Volumen haben.

Das Pumpenmodul arbeitet in Verbindung mit einem Expansionsvolumen mit Gasballast, das durch ein Membranausdehnungsgefäß gebildet wird. Der Expansionsbehälter ist stromabwärts der Flüssigkeitspumpe mit der Flüssigkeitsleitung verbunden. Die erfindungsgemäße Verwendung eines schnell regelbaren Elektromotors in Verbindung mit einer Regeleinheit ermöglicht es, den im Stand der Technik üblichen großen Druckspeicher durch einen kleinen Expansionsbehälter von beispielsweise 1 bis 2 Liter Volumen zu ersetzen. Dieser Expansionsbehälter hat hierbei weniger die Funktion eines Druckspeichers als die eines Druckstabilisators, der das Regelverhalten der Regelstrecke verbessert.

Der Expansionsbehälter ist ganz oder teilweise mit einem unter Druck stehenden Gas gefüllt. In der Heizungstechnik sind Expansionsgefäße mit Gasballast zur Pufferung von thermischen Volumenschwankungen grundsätzlich bekannt. Im Kontext der vorliegenden Erfindung dient der Expansionsbehälter jedoch als stabilisierendes Element in dem Druckregelkreis. Der Gasvordruck im Expansionsbehälter sollte hierzu vorzugsweise etwa dem halben Betriebsdruck, oder Solldruck, entsprechen.

Erfindungsgemäß ist der Drucksensor in der Flüssigkeitsleitung, an beliebiger Stelle stromabwärts der Flüssigkeitspumpe und vor dem Ausgang des Pumpenmoduls angebracht. Er kann beispielsweise, jedoch nicht notwendig, im Expansionsbehälter oder in einer Zuleitung des Expansionsbehälters angeordnet sein. Der Drucksensor mißt den Flüssigkeitsdruck in der Flüssigkeitsleitung und meldet den Ist-Druck an die Regeleinheit. Die Regeleinheit steuert entsprechend die Drehzahl des Elektromotors, um den Flüssigkeitsdruck in der Leitung möglichst nahe bei einem Sollwert zu halten und so einen konstanten, vorgegebenen Druck in dem Leitungssystem zu erzeugen.

Der Drucksensor ist vorzugsweise ein analoger Drucksensor, um einen Anstieg und Abfall des Drucks im Bereich des Flüssigkeitsablaufs ohne Verzögerung erfassen und den Elektromotor und somit den Betrieb der Pumpe ohne Verzögerung präzise regeln zu können. Um ein PI-Regelverhalten zu realisieren, liefert der Drucksensor vorzugsweise ein druckproportionales Signal. Es ist jedoch auch möglich, eine Regelungsstrategie so auszulegen, daß sie auf der Grundlage von Drucksignalen arbeitet, welche von druckempfindlichen Schaltern beim Überschreiten oder Unterschreiten vorgegebener Druckschwellwerte abgegeben werden.

Das erfindungsgemäße Pumpenmodul ermöglicht einen sehr einfachen Einsatz druckloser Speicher, und vorzugsweise Kunststoffspeicher beliebiger Größe. Dies ist einerseits für konventionelle Warmwassersysteme eine wesentliche Verbesserung und eröffnet andererseits insbesondere der thermischen Solarenergiennutzung neue Anwendungsfelder.

Mit dem erfindungsgemäßen System ist es möglich, größere Speichertanks als bisher üblich in einem drucklosen System zu betreiben, wobei eine bevorzugte Anwendung im Bereich von Sonnenkollektoren liegt. Insofern ist auch der Begriff "Heizeinrichtung" in einem breiten Sinne auszulegen und umfaßt jede Art der Wärmeeinbringung.

Die Erfindung ist im folgenden anhand bevorzugter Ausführungsformen mit Bezug auf die Zeichnungen näher erläutert. In den Figuren zeigt:
- Fig. 1: eine schematische Darstellung eines Warmwassererzeugungssystems gemäß dem Stand der Technik;
- Fig. 2: zeigt eine schematische Darstellung eines Warmwassererzeugungssystems gemäß der Erfindung; und
- Fig. 3: zeigt eine schematische Darstellung des Pumpenmoduls gemäß der Erfindung.

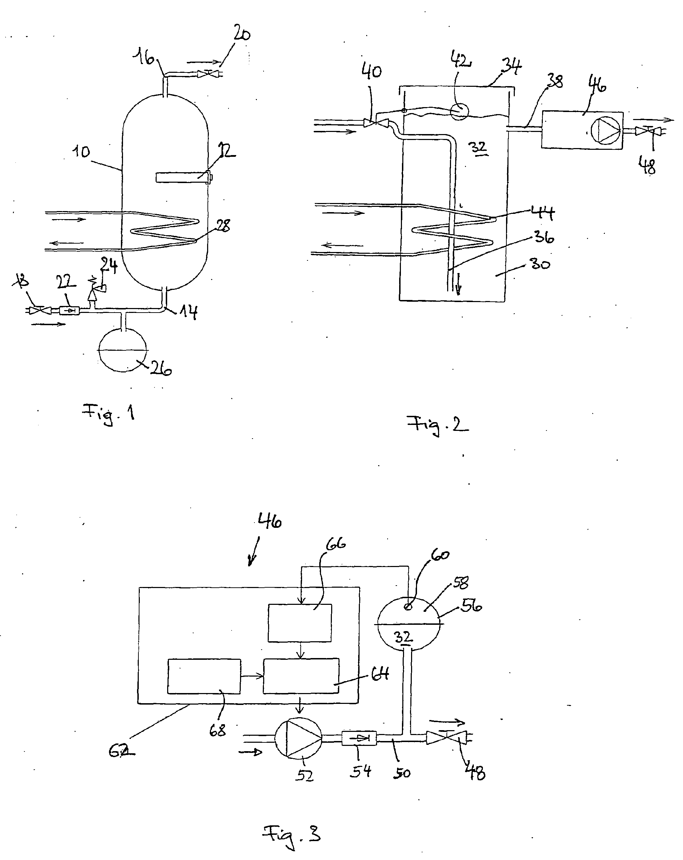

Fig. 1 zeigt eine schematische Darstellung eines Warmwassererzeugungssystems gemäß dem Stand der Technik. Das System umfaßt einen Druckspeichertank 10, der in der Regel aus Stahl besteht. Um Korrosion zu vermeiden, kann rostfreier Stahl verwendet werden, der jedoch sehr teuer ist. Alternativ kann einfacher Stahl mit einer korrosionsbeständigen Beschichtung versehen werden, wobei sich jedoch in der Praxis gezeigt hat, daß eine solche Beschichtung alleine keinen ausreichenden Schutz vor Korrosion an Nahtstellen, Übergängen und dergleichen bietet. Der Druckspeichertank 10 sollte daher eine zusätzliche Korrosionsschutzeinrichtung 12 aufweisen, beispielsweise eine lösbare Magnesiumanode an der Innenwand des Speichertanks 10, die in Fig. 1 schematisch dargestellt ist. Der Speichertank 10 hat an seinem unteren Ende einen Zulauf 14 und an seinem oberen Ende einen Ablauf 16, welche über ein Zulaufventil 18 bzw. ein Ablaufventil 20 geöffnet und geschlossen werden. Das Zulaufventil 18 ist mit dem Wassernetz verbunden und empfängt einströmendes kaltes Wasser mit Netzdruck. Zwischen dem Zulaufventil 18 und dem Speichertank 10 sind ein Rückstromverhinderer 22, ein Überdruckventil 24 und ein Expansionsvolumen 26 entlang der Zulaufleitung 14 angeordnet.

Über das Zulaufventil 18 und den Zulauf 14 strömt kaltes Wasser in den Speichertank 10, in dem es durch einen Wärmetauscher 28 erhitzt wird. Der Wärmetauscher 28 empfängt warmes Heizfluid von einer nicht dargestellten Heizeinrichtung und führt das abgekühlte Heizfluid an diese zurück. Das Wasser in dem Speichertank 10 wird auf diese Weise erhitzt, und warmes Wasser wird über das Ablaufventil 20 abgeführt.

Die Strömung des Wassers durch den Speichertank 10 sowie des Wärmefluids durch den Wärmetauscher 28 ist in Fig. 1 durch Pfeile dargestellt. Der gesamte Speichertank 10 wird mit dem Wasserdruck der Kaltwasserzuleitung beaufschlagt. Der in dem Speichertank 10 herrschende Druck wird somit in der Regel etwa dem Wasserdruck des Wasserversorgungsnetzes entsprechen, kann sich durch die Erwärmung des Wassers jedoch erhöhen. Das Expansionsvolumen 26 und das Überdruckventil 24 verhindern einen unkontrollierten Druckanstieg im Speichertank 10. Selbst wenn ein Druckminderer in der Kaltwasserzuleitung installiert wird, muß der Speichertank 10 aus Sicherheitsgründen dem Druck des Kaltwassernetzes standhalten können, so daß es notwendig ist, einen druckbeständigen Stahltank zu verwenden, wie bereits erörtert.

Fig. 2 zeigt schematisch ein Warmwassererzeugungssystem gemäß der Erfindung. Das erfindungsgemäße Warmwassererzeugungssystem umfaßt einen Speichertank 30, in dem Wasser 32, bei Atmosphärendruck gespeichert ist. Dies wird dadurch veranschaulicht, daß der Speichertank 30 mit einer zur Umgebung hin offenen Abdeckung 34 dargestellt ist. Der Speichertank 30 verfügt über einen Zulauf 36 und einen Ablauf 38, wobei der Zulauf 36 über ein Zulaufventil 40 kontrolliert wird. Das Zulaufventil 40 ist bei der gezeigten Ausführungsform mit einem Schwimmer 42 gekoppelt, der den Pegelstand des Wassers 32 in dem Speichertank 30 erfaßt. Abhängig von der Lage des Schwimmers 42 wird das Zulaufventil 40 so geöffnet und geschlossen, daß der Ablauf 38 sich immer unter der Wasseroberfläche befindet und gleichzeitig sichergestellt ist, daß das Wasser 32 nicht an der Abdeckung 34 vorbei aus dem Speichertank 30 strömt.

Da es sich bei dem Speichertank 30 um ein zur Atmosphäre offenes System handelt und das Wasser 32 nicht unter Druck darin gespeichert ist, kann der Speichertank 30 aus einem leichten und kostengünstigen Werkstoff, beispielsweise aus Kunststoff, hergestellt sein.

Das Wasser 32 in dem Speichertank 30 wird über einen Wärmetauscher 44 erhitzt, der im wesentlichen wie mit Bezug auf Fig. 1 beschrieben arbeitet. Die Strömung des Wärmetauscherfluids durch den Wärmetauscher 44 sowie der zu erhitzenden Flüssigkeit 32 durch den Speichertank 30 ist in Fig. 2 durch Pfeile gekennzeichnet.

Der Ablauf 38 ist mit einer Pumpeneinheit verbunden, der ein Ablaufventil 48 nachgeschaltet ist. Die Pumpeneinheit 46 ist mit weiteren Einzelheiten mit Bezug auf Fig. 3 beschrieben.

Fig. 3 zeigt eine schematische Darstellung der Pumpeneinheit 46 gemäß der Erfindung. Die Pumpeneinheit, oder Pumpenmodul, 46 umfaßt eine Flüssigkeitsleitung 50, welche mit dem Ablauf 38 der Fig. 2 verbunden ist. In der Flüssigkeitsleitung 50 ist eine Flüssigkeitspumpe 52 angeordnet, der ein Rückstromverhinderer 54 nachgeschaltet ist und die zu dem Ablaufventil 48 führt. Mit der Flüssigkeitsleitung 50 ist ferner ein Expansionsbehälter 56 verbunden, der teilweise mit der zu fördernden Flüssigkeit 32 und teilweise mit einem Gas 58, wie Luft, gefüllt ist. Vorzugsweise sind Gas- und Wasserbereich durch eine gasundurchlässige Membran getrennt (Membranausdehnungsgefäß). Bei der gezeigten Ausführung ist in dem Expansionsbehälter 56 ein Drucksensor 60 angeordnet, der ein Druck-Meßsignal an eine Pumpenregeleinheit 62 abgibt. Der Drucksensor kann auch an geeigneter anderer Stelle in dem Leitungssystem 50 des Pumpenmoduls 46 angeordnet sein. Der Expansionsbehälter 56 mit Gasballast 58 hat typischerweise ein Volumen von 1 bis 2 Liter und dient als stabilisierendes Element in dem Druckregelkreis. Der Gasvordruck in dem Expansionsbehälter 56 sollte vorzugsweise etwa dem halben Solldruck am Ausgang des Pumpenmoduls 46, oder dem halben Betriebsdruck, entsprechen. Die Pumpenregeleinheit 62 umfaßt einen schnell regelbaren Elektromotor 64, insbesondere einen elektronisch kommutierten Gleichstrommotor, eine Motorregeleinheit 66 und ein Schaltnetzteil 68 zur Versorgung des Elektromotors 64.

Um ein PI-Regelverhalten zu realisieren, ist der Drucksensor 60 vorzugsweise ein analoger Sensor, welcher ein druckproportionales Signal liefert. Es sind jedoch auch Regelstrategien denkbar, bei denen Druckschwellwertschalter als Drucksensoren verwendet werden.

Wie sich aus der Zusammenschau der Fig. 2 und 3 ergibt, ist die Pumpeneinheit 46 am Ausgang des Speichertanks 30 angeordnet. Die Flüssigkeit 32 in dem Speichertank steht nicht unter Druck. Die Flüssigkeit 32 wird vielmehr abhängig vom Betrieb der Flüssigkeitspumpe 52 angesaugt und aus dem Speichertank 30 gefördert. Der Betrieb der Flüssigkeitspumpe 52 wird seinerseits so gesteuert, daß über das Ablaufventil 48 ein Flüssigkeitsstrom mit einem im wesentlichen konstanten, vorgegebenen Druck abgegeben wird. Der konstante Druck wird mit Hilfe des Drucksensors 60 sowie der Motorregeleinheit 66, welche den Elektromotor 64 und somit die Pumpe 52 ansteuert, und des Expansionsvolumens 56 eingestellt. In der Praxis wird der Solldruck am Ausgang des Pumpenmoduls 46 im Bereich von etwa 2 bis 4 bar liegen.

Die Erfindung schafft damit ein kompaktes und einfaches System für die Warmwassererzeugung, das in Verbindung mit Speichertanks beliebiger Größe verwendet werden kann, wobei die Speichertanks nicht druckbeständig sein müssen und daher aus Kunststoff hergestellt werden können, welches kostengünstig ist und ein geringes Gewicht hat. Dadurch verschwinden auch die Korrosionsprobleme, welche aus dem Stand der Technik bekannt sind.

### Bezugszeichenliste

- 10: Speichertank
- 12: Korrosionsschutzeinrichtung
- 14: Zulauf
- 16: Ablauf
- 18: Zulaufventil
- 20: Ablaufventil
- 22: Hydrodiode
- 24: Überdruckventil
- 26: Ausgleichsvolumen
- 28: Wärmetauscher
- 30: Speichertank
- 32: Flüssigkeit, Wasser
- 34: Abdeckung
- 36: Zulauf
- 38: Ablauf
- 40: Zulaufventil
- 42: Schwimmer
- 44: Wärmetauscher
- 46: Pumpeneinheit
- 48: Ablaufventil
- 50: Flüssigkeitsleitung
- 52: Flüssigkeitspumpe
- 54: Rückstromverhinderer
- 56: Expansionsbehälter
- 58: Gas
- 60: Drucksensor
- 62: Pumpenregeleinheit
- 64: Elektromotor
- 66: Motorsteuereinheit
- 68: Schaltnetzteil

## Patentansprüche

1. Warmwasserversorgungssystem mit einem Wasserspeichertank (30), der einen Zulauf (36) und einen Ablauf (38) für Wasser (32) aufweist, wobei das Wasser in dem Wasserspeichertank im wesentlichen bei Atmosphärendruck gespeichert ist,
einer Heizeinrichtung zum Erhitzen des Wassers in dem Narrerspeichertank und einem Pumpenmodul (46), wobei das Pumpenmodul folgende Merkmale aufweist:
eine Flüssigkeitsleitung (50), die mit dem Ablauf (38) verbunden ist,
eine Flüssigkeitspumpe (52), die einen Flüssigkeitsstrom durch die Flüssigkeitsleitung erzeugt, **dadurch gekennzeichnet, daß** der Ablauf an dem Wasserspeichertank so angeordnet ist, daß das Wasser im wesentlichen ohne Vordruck entnehmbar ist, und daß das Pumpenmodul die weiteren Merkmale aufweist:
ein Drucksensor (60) zur Erfassung des Drucks in der Flüssigkeitsleitung,
ein Elektromotor (64) zum Antreiben der Flüssigkeitspumpe,
eine Regeleinheit (66), die ein Ausgangssignal von dem Drucksensor empfängt und abhängig davon ein Steuersignal zum Ansteuern des Elektromotors erzeugt, um den Flüssigkeitsdruck in der Flüssigkeitsleitung im wesentlichen auf einem vorgegebenen Wert von etwa 2 bis 4 bar zu halten, und
ein Expansionsvolumen (56), das mit der Flüssigkeitsleitung verbunden ist, zur Pufferung des Flüssigkeitsdrucks in der Flüssigkeitsleitung.

2. Warmwasserversorgungssystem nach Anspruch 1, **dadurch gekennzeichnet, daß** das Expansionsvolumen einen Expansionsbehälter (56) aufweist, der wenigstens teilweise mit einem unter Druck stehenden Gas (58) gefüllt ist.

3. Warmwasserversorgungssystem nach einem der vorangehenden Ansprüche, **dadurch gekennzeichnet, daß** die Regeleinheit (66) einen PI-Regler umfaßt.

4. Warmwasserversorgungssystem nach einem der vorangehenden Ansprüche, **dadurch gekennzeichnet, daß** der Drucksensor (60) an einer Zuleitung des Expansionsvolumens angeordnet ist.

5. Warmwasserversorgungssystem nach einem der vorangehenden Ansprüche, **dadurch gekennzeichnet, daß** der Elektromotor (64) ein elektronisch kommutierter, bürstenloser Gleichstrommotor ist.

6. Warmwasserversorgungssystem nach einem der vorangehenden Ansprüche, **dadurch gekennzeichnet, daß** der Elektromotor (64) an seiner Eingangsseite mit einem Schaltnetzteil (68) verbunden ist.

7. Warmwasserversorgungssystem nach einem der vorangehenden Ansprüche, **dadurch gekennzeichnet, daß** der Drucksensor (60) einen analogen Drucksensor umfaßt.

8. Warmwasserversorgungssystem nach einem der Ansprüche 1 bis 6, **dadurch gekennzeichnet, daß** der Drucksensor (60) einen druckempfindlichen Schalter umfaßt.

9. Warmwasserversorgungssystem nach einem der vorangehenden Ansprüche, **dadurch gekennzeichnet, daß** der Wasserspeichertank (30) wenigstens teilweise aus Kunststoff hergestellt ist.

## Claims

1. A hot water supply system having a water storage tank (30) that has
an inlet (36) and an outlet (38) for water (32), wherein the water in the water storage tank is substantially stored at atmospheric pressure,
a heating device to heat the water in the water storage tank and a pump module (46), wherein the pump module has the following characteristics:
a pipe (50) that is connected to the outlet (38),
a liquid pump (52) that generates a flow of liquid through the pipe,
**characterized in that** the outlet on the water storage tank is so disposed that the water can be substantially drawn without requiring pre-pressure, and that the pump module has the further characteristics:
a pressure sensor (60) to measure the pressure in the pipe,
an electric motor (64) to drive the liquid pump,
a control unit (66) that receives an output signal from the pressure sensor and contingent on this signal generates a control signal to control the electric motor in order to substantially maintain the pressure of the liquid in the pipe at a given value of approximately 2 to 4 bar,
and
an expansion volume (56) that is connected to the pipe to buffer the liquid pressure in the pipe.

2. A hot water supply system according to claim 1, **characterized in that** the expansion volume has an expansion tank (56) which is at least partially filled with a gas (58) under pressure.

3. A hot water supply system according to one of the preceding claims, **characterized in that** the control unit (66) comprises a Pl control.

4. A hot water supply system according to one of the preceding claims, **characterized in that** the pressure sensor (60) is disposed at a feed line of the expansion volume.

5. A hot water supply system according to one of the preceding claims, **characterized in that** the electric motor (64) is an electronically commutated brushless direct current motor.

6. A hot water supply system according to one of the preceding claims, **characterized in that** the electric motor (64) is connected at its input side to a switch mode power supply (68).

7. A hot water supply system according to one of the preceding claims, **characterized in that** the pressure sensor (60) comprises an analogue pressure sensor.

8. A hot water supply system according to one of the claims 1 to 6, **characterized in that** the pressure sensor (60) comprises a pressure sensitive switch.

9. A hot water supply system according to one of the preceding claims, **characterized in that** the water storage tank (30) is at least partially made of plastics.

## Revendications

1. Système d'alimentation d'eau chaude, comportant un réservoir d'eau (30) qui présente une arrivée (36) et une sortie (38) pour l'eau (32), l'eau étant stockée dans le réservoir d'eau essentiellement sous pression atmosphérique,
un système de chauffage pour chauffer l'eau dans le réservoir d'eau et un module de pompe (46), le module de pompe présentant les caractéristiques suivantes :
une conduite de liquide (50) qui est reliée à la sortie (38),
une pompe à liquide (52) qui produit un flux de liquide à travers la conduite de liquide,
**caractérisé en ce que**
la sortie sur le réservoir d'eau est agencée de telle sorte que l'eau peut être prélevée essentiellement sans pression d'admission, et **en ce que** le module de pompe présente les caractéristiques suivantes :
un capteur de pression (60) pour détecter la pression dans la conduite de liquide,
un moteur électrique (64) pour entraîner la pompe à liquide,
une unité de régulation (66) qui reçoit un signal de sortie de la part du capteur de pression et, en fonction de cela, engendre un signal de commande pour piloter le moteur électrique pour maintenir la pression de liquide dans la conduite de liquide essentiellement à une valeur prédéterminée d'environ 2 à 4 bar,
et
un volume d'expansion (56) qui est relié à la conduite de liquide pour amortir la pression de liquide dans la conduite de liquide.

2. Système d'alimentation d'eau chaude selon la revendication 1, **caractérisé en ce que** le volume d'expansion présente un vase d'expansion (56) qui est rempli au moins partiellement de gaz (58) sous pression.

3. Système d'alimentation d'eau chaude selon l'une des revendications précédentes, **caractérisé en ce que** l'unité de régulation (66) comprend un régulateur à action proportionnelle et intégrale.

4. Système d'alimentation d'eau chaude selon l'une des revendications précédentes, **caractérisé en ce que** le capteur de pression (60) est agencé sur une conduite d'amenée du volume d'expansion.

5. Système d'alimentation d'eau chaude selon l'une des revendications précédentes, **caractérisé en ce que** le moteur électrique (64) est un moteur à courant continu sans brosse et à commutation électronique.

6. Système d'alimentation d'eau chaude selon l'une des revendications précédentes, **caractérisé en ce que** sur son côté entrée, le moteur électrique (64) est relié à une partie de réseau de distribution (68).

7. Système d'alimentation d'eau chaude selon l'une des revendications précédentes, **caractérisé en ce que** le capteur de pression (60) comprend un capteur de pression analogique.

8. Système d'alimentation d'eau chaude selon l'une des revendications précédentes, **caractérisé en ce que** le capteur de pression (60) comprend un commutateur sensible à la pression.

9. Système d'alimentation d'eau chaude selon l'une des revendications précédentes, **caractérisé en ce que** le réservoir d'eau (30) est fabriqué au moins partiellement en matière plastique.
